# EUROPÄISCHE PATENTSCHRIFT

(11) **EP 3 084 360 B1**
(45) Veröffentlichungstag und Bekanntmachung des Hinweises auf die Patenterteilung: **25.08.2021**
(21) Anmeldenummer: 14796785.5
(22) Anmeldetag: 14.11.2014
(51) Int. Cl.: G01F 1/58, G01F 15/00, G01F 15/14, G01F 15/18

(54) **MESSROHR FÜR EIN MAGNETISCH-INDUKTIVES DURCHFLUSSMESSGERÄT**
MEASUREMENT PIPE FOR A MAGNETIC-INDUCTIVE FLOW METER
TUYAU DE MESURE POUR UN DÉBITMÈTRE INDUCTIF-MAGNÉTIQUE

(30) Priorität: 19.12.2013 DE 102013114429
(43) Veröffentlichungstag der Anmeldung: 26.10.2016
(73) Patentinhaber: Endress+Hauser Flowtec AG, 4153 Reinach (BL) (CH)
(72) Erfinder: WOHLGEMUTH, Werner, CH-4206 Seewen (CH); VOIGT, Frank, 79576 Weil am Rhein (DE)
(74) Vertreter: Andres, Angelika Maria
(86) Internationale Anmeldenummer: PCT/EP2014/074621
(87) Internationale Veröffentlichungsnummer: WO 2015/090759

(56) Entgegenhaltungen:
- EP-A1- 0 766 069
- EP-A1- 1 039 269
- DE-A1- 3 735 515
- DE-A1-102004 048 765
- DE-A1-102006 018 415
- DE-A1-102007 038 507
- GB-A- 2 314 902
- US-A- 3 213 685
- US-A- 3 695 104
- US-A1- 2009 178 489

## Beschreibung

Die vorliegende Erfindung betrifft ein Messrohr nach dem Oberbegriff des Anspruchs 1 und ein magnetisch-induktives Durchflussmessgerät nach dem Oberbegriff des Anspruchs 9.

Bei Messrohren für magnetisch-induktive Durchflussmessgeräte sind entweder Messrohre aus Kunststoff bekannt oder, zum weit überwiegenden Teil, Messrohre mit einem Trägerrohr aus Metall, insbesondere aus Stahl, verwendet. Bei Letzteren besteht jedoch das Problem, dass das Material des Messrohres selbst leitfähig ist. Um jedoch einen Spannungsabgriff an den Messelektroden zu ermöglichen, muss das Messrohr elektrisch isoliert sein. Hierzu wird üblicherweise eine isolierende Kunststoffschicht, ein sogenannter Liner, verwendet. Die Anhaftung dieser Materialien auf der Metalloberfläche ist allerdings nicht optimal. Zudem kann der Liner unter Prozessbedingungen mechanisch verformt werden Daher wird ein Lochblech eingesetzt, welches dem Linermaterial als Stützkörper dient. Dieser Stützkörper ist in das Trägerrohr eingesetzt und stützt das Linermaterial ab. Die DE 10 2008 054 961 A1 der Anmelderin offenbart mehrere mögliche Ausführungsvarianten eines solchen Lochblechs, beispielsweise ein Blech welches nur segmentweise eine Lochung aufweist.

Ein großes Thema ist die Verankerung des Liners im Trägerrohr. Eine Verankerungsmöglichkeit wird in der vorgenannten DE 10 2008 054 961 beschrieben. Hier wird der Stützkörper durch einen Presssitz am Messrohr festgelegt, so dass der Stützkörper nur aufgrund des Anpressdruckes jedoch ohne Stoffschluss im Trägerrohr festgelegt ist. Diese Variante hat sich grundsätzlich als praktikable und kostengünstige Variante erwiesen, welche mit geringem produktionstechnischem Aufwand umsetzbar ist. Allerdings kann sich über längere Zeit die Anpressspannung des Lochblechs verringern und sich der Liner mit dem Lochblech im Messrohr verdrehen.

Eine weitere Möglichkeit der Verankerung wird in der DE 10 2006 018 415 A1 beschrieben. Hierbei handelt es sich um zwei als Halbschalen gefertigte Stützkörper, die als Lochbleche gefertigt sein können. Diese werden über Schweißfahnen endseitig unter Stoffschluss am Messrohr befestigt.

Die Verschweißung eines Lochblechs hat den Nachteil, dass meist nur wenig Platz zwischen dem Lochblech und dem Trägerrohr zum Hintergießen mit Linermaterial besteht. Durch die Temperaturunterschiede zwischen Lochblech und Trägerrohr können sich aufgrund thermischer Ausdehnungsunterschiede die Schweißstellen auch im Langzeitbetrieb lösen.

Ein Lochgitter zur Stützung des Liners wird zudem in der US 5,773,723 A1 und die US 2008/0196510 A1 zeigen ebenfalls als Lochblech oder Lochgitter ausgebildete Stützkörper in einem Trägerrohr. Die Funktion einer Stützung wird auch in diesen Ausführungsvarianten beschrieben. Wie sich aus den Figuren ergibt weisen diese Stützkörper allerdings keinerlei Verankerung am Trägerrohr auf, sondern sie sind ohne Verankerung im Liner eingebettet.

Bei Gummi-Linern, PFA oder PTFE-Linern bilden sich bekanntermaßen nur äußerst geringe adhäsive Bindungen zum Trägermessrohr aus. Ein unerwünschtes Verdrehen des Liners im Messrohr bei längerem Gebrauch ist daher wahrscheinlich, zumal keinerlei zusätzliche Verankerungen des Liners vorgesehen sind.

Eine zum Lochblech alternative Möglichkeit der Stützung wird in der EP 1 039 269 A1 beschrieben. Hier wird ein Sintermaterial vollflächig im Trägerrohr verteilt und bildet einen rohrförmigen Stützkörper aus, welcher sich nahezu vollständig über die Innenwandung des Trägerrohres erstreckt. In die Poren des locker-körnigen bzw. schaumartigen Sintermaterials kann das Material zur Auskleidung eindringen und sich verankern. Durch die In-situ Sinterung erfolgt eine besonders gute Anbindung des stützenden Sintermaterials an das stählerne Trägerrohr.

Der Sinterwerkstoff ist allerdings vergleichsweise teuer und zudem aufwendiger im Produktionsprozess realisierbar.

Eine weitere Alternative zur Verankerung des Liners an das Trägerrohr wird in der amerikanischen Patentschrift US 3,213,685 A1 offenbart. Hier wird der Liner durch eine endständig eingesetzte Muffe aus beispielsweise Gusseisen gegen die Innenwand des Trägerrohrs gepresst und somit fixiert. Für eine optimale Fixierung muss der Liner jedoch endständig dickenreduziert und geschlitzt sein. Dadurch vermindert sich jedoch die Haltbarkeit des Liners und die Herstellung des Liners ist deutlich aufwändiger.

Die DE 3 735 515 A1 lehrt eine Fixierung eines Messrohres aus Keramik, Glas oder Kunststoff in einem metallischen Trägerrohr. Dafür wird ein Ring zwischen Trägerrohr und Messrohr eingesetzt, der durch Dichtungsringe von den beiden Körper abgestützt wird. Der mehrteilige, leicht zu montierende Aufbau lässt sich jedoch nicht direkt auf Messrohre mit isolierende Liner übertragen.

Die US 3 695 104 A offenbart ein Messrohr mit einem Liner und zwei endständigen Stützbuchsen gemäß dem Oberbegriff des Anspruchs 1.

Ausgehend vom vorgenannten Stand der Technik ist es nunmehr Aufgabe der vorliegenden Erfindung ein Messrohr für ein magnetisch-induktives Durchflussmessgerät bereitzustellen, in welchem eine alternative kostengünstige und zuverlässigere Verankerung des Liners realisiert ist, die zugleich Verformungen des Liners im Endbereich des Messrohres reduziert. Die vorliegende Erfindung löst diese Aufgabe durch ein Messrohr mit den Merkmalen des Anspruchs 1 und durch ein magnetisch-induktives Durchflussmessgerät mit den Merkmalen des Anspruchs 9.

Ein erfindungsgemäßes Messrohr für ein magnetisch-induktives Durchflussmessgerät, umfasst ein Trägerrohr und einen im Trägerrohr angeordneten Liner wobei das Messrohr zumindest eine endständige Stützbuchse aus porösem Material aufweist, zur Verankerung des Liners am Trägerrohr, wobei die Sinterbuchse in eine Ausnehmung in einem Endbereich des Messrohres, insbesondere des Trägerrohres eingesteckt ist, wobei die Stützbüchse radial innenseitig mit dem Liner verankert ist, wobei die Stützbüchse axial innenseitig eine Anschlagsfläche für den Anschlag eines Stützkörpers aufweist. Dies ermöglicht u.a. eine kompakte Ausführung der Gesamtkonstruktion.

Das poröse Material kann grundsätzlich Kunststoff, beispielsweise ein offenzelliger Kunststoffschaum, oder eine Keramik, beispielsweise eine Schaumkeramik, oder ein Sintermetall, mit Poren, sein.

Die Stützbuchse kann in das Material des Trägerrohres eingesintert sein oder vorzugsweise als separates Bauteil vorgesehen sein.

Anders als in Lehre der EP 1 039 269 A1 nach welcher das Trägerrohr eine Auskleidung komplett mit Sintermaterial aufweist, handelt es sich bei der Variante der vorliegenden Erfindung lediglich um eine Stützbuchse, also ein aufgestecktes Bauteil und keine In-situ über die ganze Messrohrlänge eingebrachte Sinterschicht.

Es hat sich überraschend gezeigt, dass eine solche endseitige Stützbuchse hinlänglich zur Anbindung des Liners an ein Messrohr ausreicht. Zugleich bietet die Verwendung einer Stützbuchse erheblich geringeren Aufwand bei der Herstellung, wodurch sich sowohl ein Zeit- als auch ein Kostenersparnis bezüglich des verwendeten Materials ergeben. Die Stützbuchse kann dabei insbesondere schon als gesondertes Fertigteil genutzt werden und muss nicht erst im Trägerrohr ausgeformt werden.

Vorteilhafte Ausgestaltungen der Erfindung sind Gegenstand der Unteransprüche.

Das Material der Stützbuchse ist ein sinterfähiges Metall, insbesondere Sinterbronze. Dieses Material verschmilzt nicht im Sintervorgang zu einem kompakten Material sondern weist noch eine hinreichende Porosität auf. Zugleich ist Metall gegenüber Kunststoff zumeist mechanisch widerstandsfähiger und auch thermisch belastbarer. Schaumkeramiken sind oftmals hart und widerstandfähig, tendieren aber bei Erschütterungen und thermischen Ausdehnungen zum Zerbrechen. Daher wäre eine Anwendung solcher Messrohre begrenzt. Demgegenüber ist insbesondere Sinterbronze sehr gut bearbeitbar. Aufgrund der metallischen Duktilität kommt es zudem nicht zum Materialbruch bei Erschütterungen.

Das Material der Stützbuchse sind Sinterkügelchen, welche durch einen Sintervorgang miteinander verbunden sind, und welche in den Kugelzwischenräumen Poren aufweisen. Dadurch kann eine weiter-verbesserte Widerstandsfähigkeit gegenüber Druckbelastungen erreicht werden. Genau diese Funktionalität ist sehr wichtig bei der Ausgestaltung einer Dichtleiste eines Messrohres. Besonders bevorzugt bestehen die Sinterkügelchen dabei aus Bronze.

Für eine optimale Porengröße zur Anbindung des Liners weisen die Sinterkügelchen einen Durchmesser von mehr als 0,1 mm auf.

Das Trägerrohr ist vorteilhaft jeweils endseitig mit einem Materialwulst aus Linermaterial bedeckt, welche einen Anschlag für einen Prozessanschluss bildet. Die elastische Verformbarkeit des Liners bewirkt eine besonders hohe Dichtigkeit. Daher kann der Liner direkt als Anschlagsfläche dienen und sich unter dem mechanischen Druck beim Anschluss des Prozessrohres ähnlich einer Dichtung verformen.

Die Anschlussfläche je einer endständige Stützbuchse, mit welcher das Messrohr an einen Prozessanschluss anschließbar ist, sollte vorteilhafterweise teilweise oder vollständig mit dem Materialwulst aus Linermaterial bedeckt sein, um so eine breite Dichtfläche zu schaffen.

Weitere mechanische Stabilität im Mittelbereich des Trägerrohres gewährleistet ein im Liner eingebetteter Stützkörper, vorzugsweise ein Lochblech.

Um eine Verdrehsicherung des Liners zu garantieren ist es von Vorteil, wenn zwischen dem Trägerrohr und dem Stützkörper eine spiralförmige Kontur angeordnet ist.

Es ist von Vorteil, wenn die Stützbuchse eine Anschlagsfläche für den Anschlag des Stützkörpers aufweist. Dadurch kann die Bewegung der Stützbuchse und somit auch die Bewegung des Liners in axialer Richtung fixiert werden.

Für ein besseres Einführen der Stützbuchse in eine Ausnehmung ist es von Vorteil, wenn die Stützbuchse eine ringförmige Gestalt aufweist, mit einer oberen und einer unteren Kreisringfläche, wobei obere Kreisfläche in Richtung eines anzuschließenden Prozessrohres gerichtet ist und wobei sich die Stützbuchse sich in Richtung der unteren Kreisfläche verjüngt. Anders als bei herkömmlichen massiven Metallbuchsen, kann poröses Material allerdings leicht splittern, brechen oder sich verformen. Daher ist es nicht trivial eine solche Verjüngung oder ähnliche Materialausformungen auch bei Stützbuchsen aus porösen Materialien vorzusehen. Bei Sintermetallen kann dies dadurch gelöst werden, dass die Sinterkügelchen in eine Form gegeben werden und anschließend miteinander im Sinterprozess durch thermische Behandlung verbunden werden.

Ein erfindungsgemäßes magnetisch-induktives Durchflussmessgerät ist mit einem erfindungsgemäßen Messrohr versehen.

Nachfolgend soll der Gegenstand der Erfindung anhand mehrerer Ausführungsbeispiele näher erläutert werden. Sie zeigen:
- Fig. 1: Schnittansicht ersten Zwischenproduktes zur Herstellung eines ersten Messrohres für ein magnetisch-induktives Durchflussmessgerät;
- Fig. 1a: Detaildarstellung der Fig 1;
- Fig. 2: Schnittansicht eines zweiten Zwischenproduktes zur Herstellung eines ersten Messrohres für ein magnetisch-induktives Durchflussmessgerät;
- Fig. 2a: Detaildarstellung der Fig 1;
- Fig. 3: Schnittansicht einer ersten Ausführungsvariante eines nichterfindungsgemäßen Messrohres für ein magnetisch-induktives Durchflussmessgerät;
- Fig. 3a: Detaildarstellung der Fig 1;
- Fig. 4: Schnittansicht eines ersten Zwischenproduktes zur Herstellung eines erfindungsgemäßen Messrohres für ein magnetisch-induktives Durchflussmessgerät;
- Fig. 4a: Detaildarstellung der Fig 4;
- Fig. 5: Schnittansicht einer ersten Ausführungsvariante eines erfindungsgemäßen Messrohres für ein magnetisch-induktives Durchflussmessgerät;
- Fig. 5a: Detaildarstellung der Fig 5;
- Fig. 6: Perspektivansicht eines zweiten Zwischenproduktes zur Herstellung eines erfindungsgemäßen Messrohres;
- Fig. 7: Perspektivansicht einer zweiten Ausführungsvariante eines erfindungsgemäßen Messrohres eines magnetisch-induktiven Durchflussmessgerätes;
- Fig. 8: Schematische Darstellung eines magnetisch-induktiven Durchflussmessgerätes nach dem Stand der Technik;
- Fig. 9: Schnittansicht eines dritten Zwischenproduktes bei der Herstellung eines erfindungsgemäßen Messrohres;
- Fig. 10A: Schnittansicht eines vierten Zwischenproduktes bei der Herstellung eines Messrohres;
- Fig. 10B: Perspektivansicht des vierten Zwischenproduktes der Fig. 10A;
- Fig. 10C: Detailansicht eines Stützkörpers des vierten Zwischenproduktes der Fig. 10A;
- Fig. 10D: Detailansicht eines Stützkörpers und eines Trägerrohres der Fig. 10A; und
- Fig. 11: Schnittansicht einer fünften Ausführungsvariante eines erfindungsgemäßen Messrohres eines magnetisch-induktiven Durchflussmessgerätes.

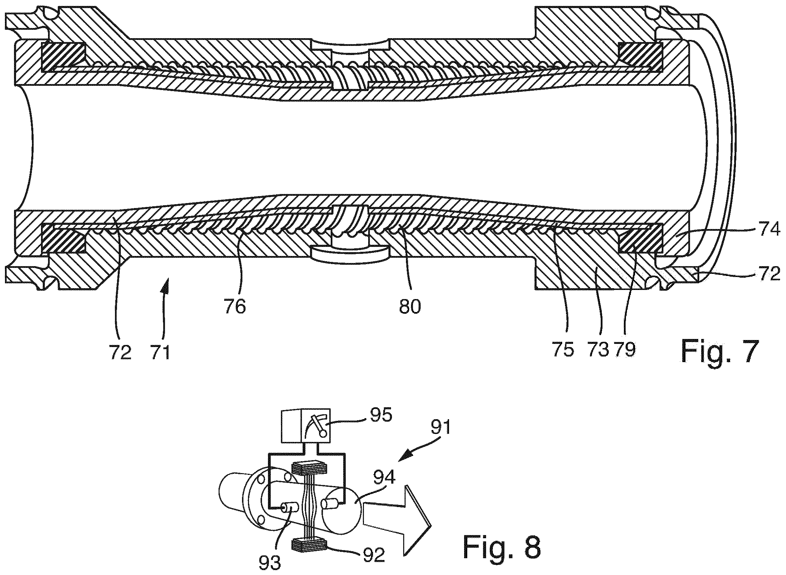

Der Aufbau und das Messprinzip eines magnetisch-induktiven Durchflussmessgerätes 91 ist grundsätzlich bekannt und wird schematisch in einem Beispiel in Fig. 8 dargestellt. Gemäß dem Faraday'schen Induktionsgesetz wird in einem Leiter, der sich in einem Magnetfeld bewegt, eine Spannung induziert. Beim magnetisch-induktiven Messprinzip entspricht das fließende Messmedium dem bewegten Leiter, welches mit einer Durchflussgeschwindigkeit v durch ein Messrohr 94 fließt. Ein Magnetfeld B mit konstanter Stärke wird durch zwei Feldspulen 92 zu beiden Seiten eines Messrohres 94 erzeugt. Senkrecht dazu befinden sich an der Rohrinnenwand des Messrohres 94 zwei Messelektroden 93, welche die beim Durchfließen des Messmediums erzeugte Spannung Uₑ abgreifen. Der Abstand der Messelektroden ist mit L bezeichnet. Die induzierte Spannung Uₑ verhält sich proportional zur Durchflussgeschwindigkeit v und damit zum Volumendurchfluss Q des Messmediums, welcher durch eine Auswerteeinheit 95 berechnet werden kann. Das durch die Feldspulen 92 aufgebaute Magnetfeld B wird durch einen getakteten Gleichstrom der Stromstärke I mit wechselnder Polarität erzeugt. Dies gewährleistet einen stabilen Nullpunkt und macht die Messung unempfindlich gegenüber Einflüssen durch Mehrphasenstoffe, Inhomogenität in der Flüssigkeit oder geringer Leitfähigkeit. Es sind magnetisch-induktive Durchflussmessgeräte mit Spulenanordnungen mit mehr als zwei Feldspulen bekannt und anderer geometrischer Anordnung bekannt.

Bei Messrohren für magnetisch-induktive Durchflussmessgeräte sind entweder Messrohre aus Kunststoff bekannt oder, zum weit überwiegenden Teil, Messrohre mit einem Trägerrohr aus Metall, insbesondere aus Stahl, verwendet. Bei Letzteren besteht jedoch das Problem, dass das Material des Messrohres selbst leitfähig ist. Um jedoch einen Spannungsabgriff an den Messelektroden zu ermöglichen, muss das Messrohr elektrisch isoliert sein. Hierzu wird üblicherweise eine isolierende Kunststoffschicht, ein sogenannter Liner, verwendet.

Verschiedene Linermaterialien für diesen Zweck sind dem Fachmann bekannt. Als geeignete Linermaterialien können unter anderem PUR, PTFE, PFE oder Gummimaterialien, wie Kautschuk, insbesondere Vinylkautschuk, verwendet werden. Die Anhaftung dieser Materialien auf der Metalloberfläche ist allerdings nicht optimal. Zudem kann es beim Linermaterial zu Verformungen kommen.

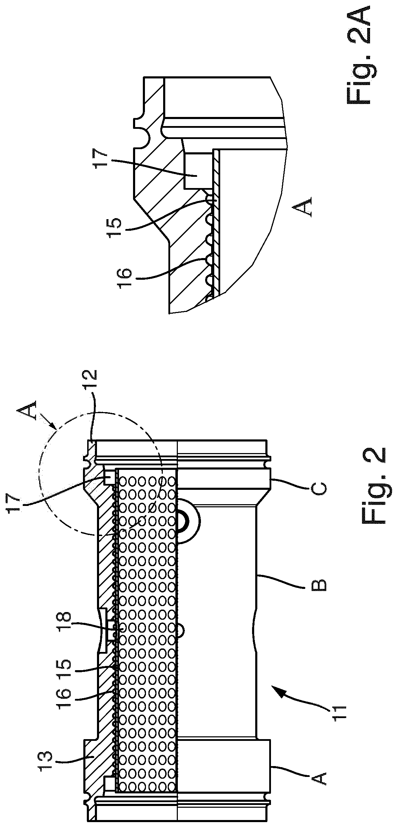

Daher wird ein Lochblech eingesetzt, welches dem Linermaterial als Stützkörper dient. Dieser Stützkörper ist in das Trägerrohr eingesetzt und stützt das Linermaterial ab. Die DE 10 2008 054 961 A1 der Anmelderin offenbart mehrere mögliche Ausführungsvarianten eines solchen Lochblechs, beispielsweise ein Blech welches nur segmentweise eine Lochung aufweist. Das Lochblech kann allerdings auch durchgehend gelocht sein, wie dies z.B. in Fig. 2 der vorliegenden Erfindung gezeigt ist.

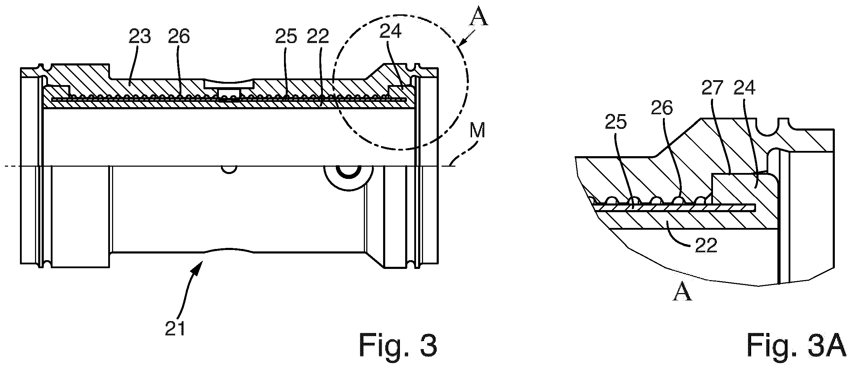

Fig. 3 zeigt ein Ausführungsbeispiel eines nicht-erfindungsgemäßen Messrohres 21 mit einer Messrohrachse M. Es zeigt ein Trägerrohr 23. Dieses ist bevorzugt ein Massivrohr aus Metall, das besonders bevorzugt aus Stahl, insbesondere Edelstahl, gefertigt ist. Das Material des Trägerrohres ist allerdings nicht ausschließlich auf metallische Materialien beschränkt.

Das Trägerrohr 23 weist eine zur Messrohrachse M hin ausgerichtete Innenwandung auf, welche eine spiralförmige Kontur 26 aufweist.

Die spiralförmige Kontur 26 kann alternativ auch durch ein separates Bauteil lediglich an der Innenwandung eines tragenden Rohres angeordnet sein. Hierzu kann ein Federelement oder ein Einsatz dienen die im tragenden Rohr vorliegen und, besonders bevorzugt, mit dem tragenden Rohr verbunden sind. Die Einheit aus dem separaten Bauteil, z.B. das Federelemente oder der Einsatz, und das tragende Rohr sind im Sinne der Erfindung als Trägerrohr zu verstehen.

Die spiralförmige Kontur weist, wie dies naturgemäß bei einer Spirale üblich ist, eine Vertiefung auf. Diese Vertiefung oder Vertiefungen können z.B. als umlaufende Einkerbung, analog zu einem Gewindegang ausgestaltet sein. Bei einem Federelement ist der Vertiefungsbereich breiter ausgestaltet als bei einer üblichen Einkerbung. Ebenfalls einer Spirale inhärent ist eine Steigung, mit welcher sich die Windungen der Spirale in Richtung einer Achse, hier der Messrohrachse M, ausbreiten.

In radialer Richtung zur Messrohrachse M hin weist das Trägerrohr einen Stützkörper 25 auf, welcher vorzugsweise zylindrisch ausgebildet ist. Der Stützkörper 25 kann beispielsweise als Gitter oder Netz ausgebildet sein. Eine bevorzugte Ausführungsvariante eines Stützkörpers 25 stellt ein Blech dar, welches zumindest bereichsweise eine Lochung aufweist.

In einer besonders bevorzugten Ausführungsvariante des Blechs handelt es sich um ein Lochblech, bei welchem Lochungen über die gesamte Länge des Lochblechs verteilt sind. Dadurch wird eine einheitliche Einbindung des Lochblechs in einer Linerschicht 22 gewährleistet.

Der Stützkörper 25 weist vorzugsweise Materialunterbrechungen auf. Im Falle eines Bleches handelt es sich bei den Materialunterbrechungen um Löcher. Bei Netzen oder Gitter handelt es sich um Maschen.

Der Liner ist insbesondere ein Vergussmaterial. Endständig an beiden Enden des Stützkörpers 25 weist der Liner eine Materialverdickung 24 auf, in welcher der Stützkörper 25 endständig eingefasst ist.

In Fig. 3 liegt der Stützkörper 25 auf der spiralförmigen Kontur 26 auf. Es ist jedoch auch möglich, dass der Stützkörper 25 von der spiralförmigen Kontur 26 beabstandet ist. Diese Beabstandung kann je nach Nennweite des Messrohres 32 variieren um wenige µm bis hin zu einigen Millimetern.

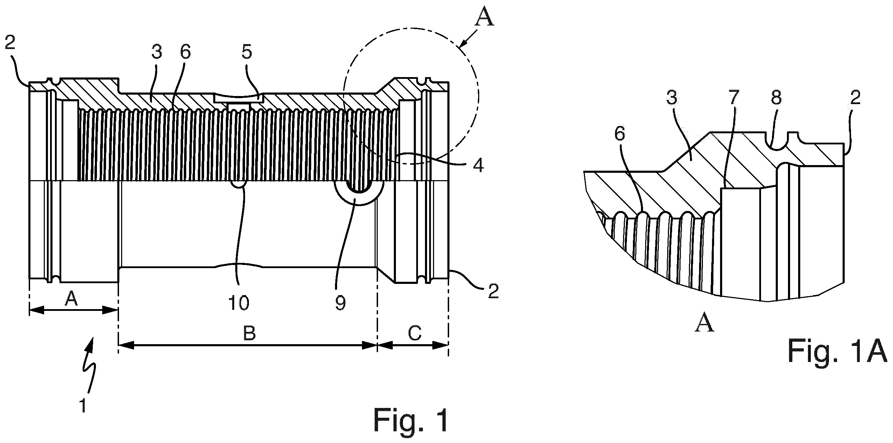

Fig. 1-8 sind lediglich als schematische Darstellungen zu verstehen. Die Vertiefung der spiralförmigen Kontur 26 ist ebenfalls mit Linermaterial teilweise oder vollständig ausgefüllt. In der Ausführungsvariante der Fig. 3, in welcher der Stützkörper 25 als Blech ausgestaltet ist, sind die Löcher des Blechs mit Linermaterial ausgefüllt. Bei einem Vergussmaterial als Linermaterial ist somit das Blech im Linermaterial vergossen. Dadurch wird eine besonders günstige Einbindung des Stützkörpers 25 in den Liner 22 erreicht.

Sofern eine Prozessleitung an das Messrohr 21 angeschlossen ist, stößt die Prozessleitung gegen die Materialverdickung 24. Zugleich wird die axiale Bewegung des Linermaterials blockiert. Ein axiales Verschieben des Liners 22 und des Stützkörpers 25 gegenüber dem Trägerrohr 23 ist daher ausgeschlossen.

Durch die spiralförmige Kontur 26 in Kombination mit der axialen Arretierung des Linermaterials 22 kann auch kein Verdrehen des Liners im Messrohr mehr erfolgen. Da der Verbund aus Linermaterial und Stützkörper in der Vertiefung bei axialer Arretierung aufgrund der Steigung der fortschreitenden Vertiefung in seiner Verdrehbewegung ebenfalls blockiert wird.

Die spiralförmige Kontur ermöglicht somit gegenüber bisherigen Lösungen eine kostengünstige und zugleich verlässliche Möglichkeit einer Verdrehsicherung des Linermaterials 22 und des Stützkörpers 25 im Trägerröhr 23.

Fig. 1 und Fig. 2 zeigen einzelne Zwischenprodukte bei der Herstellung des vorgenannten Messrohres. Die in Fig. 1 und 2 gezeigten und erläuterten Detail können allerdings auch auf ein erfindungsgemäßes Messrohr angewandt werden.

Fig. 1 zeigt ein Zwischenprodukt 1 mit einem Trägerrohr 3. Dieses Trägerrohr unterteilt sich in ein zwei Endsegmente A und C und in ein Mittelsegment B. Dieses Trägerrohr 3 weist endständig jeweils eine Ausformung 2 zum Anschluss eines Prozessanschlusses auf. Zwischen den Ausformungen 2 erstreckt sich in zumindest in dem Mittelsegment B des Trägerrohres 3 eine spiralförmige Kontur 6. Diese spiralförmige Kontur 6 kann beispielsweise mittels eines Gewindeschneiders in die Innenwandung des Trägerrohres 3 eingebracht werden. In diesem Fall kann die Kontur als Gewindegang verstanden werden.

Das Trägerrohr 3 der Fig. 1 weist Verankerungspositionen 5 und 10 für Messelektroden und Magnetspulen eines magnetisch-induktiven Durchflussmessgerätes auf. Da der Aufbau und das Messprinzip eines magnetisch-induktiven Durchflussmessgerätes grundsätzlich bekannt ist (siehe Fig. 8), wurden diese Bauteile der Übersichtlichkeit halber weggelassen.

Darüber hinaus weist das Trägerrohr 3 der Fig. 1 einen Anschluss 9 für eine weitere Elektrode, z.B. eine MSÜ-Elektrode auf, welche den Füllstand des Messrohres überwacht. Es sind auch MSÜ-Elektroden bekannt, welche zusätzlich die Mediumstemperatur ermitteln können.

Die Kontur weist, wie bei einer Spiralform üblich, eine Steigung auf. Diese ist insbesondere am Konturansatz 4 angedeutet. Allerdings ist die Steigung in diesem Fall in der schematischen Darstellung der Fig. 1 und Fig. 1A nur gering.

Darüber hinaus weist das Trägerrohr 3 in den Endbereichen eine Aufweitung 7, hier eine stufenförmige Aufweitung, des Innenumfangs auf. Diese Bereiche dienen als Anschlussbereich, in welchen ein Prozessanschluss aufsteckbar oder aufschraubbar ist. Im Anschluss kann der Prozessanschluss zusätzlich festgeschweißt werden. Das Trägerrohr 3 weist in diesem Endbereich zudem eine umlaufende Vertiefung 8 zur Aufnahme eines Dichtringes auf an der Außenwandung auf.

Fig. 2 zeigt ein Zwischenprodukt 11 bei der Herstellung eines Messrohres. Es zeigt ein im Wesentlichen baugleich zur Fig. 1 ausgestaltetes Trägerrohr 13 mit zwei Endsegmenten A und C und einem Mittelsegment B, sowie mit einer spiralförmigen Kontur 16, welche sich zumindest im Mittelbereich B des Trägerrohres 13 entlang der Innenwandung erstreckt. In dem Trägerrohr 13 ist ein Stützkörper 15 - hier in Form eines Lochbleches - eingesetzt. Der Stützkörper 25 weist Materialunterbrechungen 18 in Form von Löchern auf. In den Endbereichen A und C sind jeweils Ausformungen 12 zur Aufnahme von Prozessanschlüssen angeordnet.

Zudem weisen die Endbereiche A und C des Trägerrohres 13 jeweils eine umlaufende Ausnehmung 17 auf, so dass zwischen den endständigen Bereichen des Stützkörpers 15 und dem Trägerrohr 13 ein erhöhter Abstand, verglichen zum deren Abstand im Mittelsegment B, besteht. Dieser Abstand dient zur Aufnahme einer erhöhten Menge an Linermaterial und/oder zur Aufnahme eines Stützringes zur Stützung des axialen Anschlags des Linermaterials.

Ausgehend von dem Zwischenprodukt 11 der Fig. 2 kann dieses nunmehr mit einer Auskleidungsschicht aus Linermaterial 22 versehen werden. Dieses kann als Vergussmaterial eingebracht werden. Dabei fließt es durch die Materialausnehmungen 18 und lagert sich in die Vertiefung der spiralförmigen Kontur 26, 16 oder 6 ein. Bei der Aushärtung des Liners nimmt dieser die Form der spiralförmigen Kontur 6, 16, 26 an. So weist der Liner 22 mit dem eingebundenen Stützkörper nach dessen Aushärtung eine Form in der Art einer Hohlschraube auf.

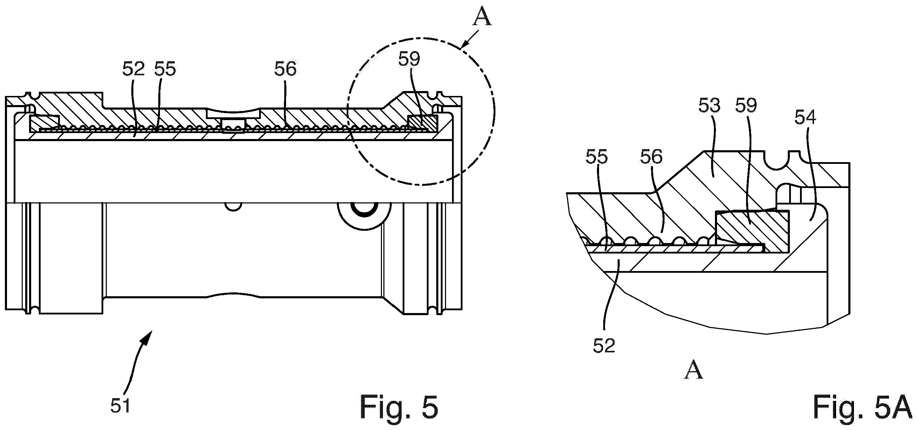

Fig. 5 zeigt eine erste Ausführungsvariante eines erfindungsgemäßen Messrohres 51. Dieses weist ein Trägerrohr 53 mit einer spiralförmigen Kontur 56 an der Innenwandung auf. Zudem weist das Messrohr 51 einen Stützkörper 55 auf, welcher in einem Liner 52 eingebettet ist. Der Liner durchdringt die im Stützkörper 55 vorgesehenen Materialausnehmungen und dringt in die Vertiefungen der spiralförmigen Kontur 56 ein.

Endständig wird der Stützkörper 55 an seiner ringförmigen Stirnfläche mittels einer zylindrischen Stützbuchse 59 als Anschlag fixiert. Dadurch wird eine axiale Bewegung des Stützkörpers 55 und damit auch des Liners 52 verhindert. Die Stützbuchse 59 besteht aus Sintermaterial. Dies ist von Vorteil, da sich dem Linermaterial durch die Poren des Sintermaterials eine hohe Verankerungsoberfläche bietet.

Auf der Stützbuchse 59 ist ebenfalls Linermaterial 54 angeordnet. Dieses bildet eine Materialwulst. Eine endständig zum Prozessanschluss hin breiter werdende Materialwulst aus Linermaterial wird als Dichtleiste bezeichnet. Dabei befindet sich das Linermaterial zwischen dem Prozessanschluss und dem Trägerrohr 53. Oftmals wird als Linermaterial ein Elastomer eingesetzt. Dieses wirkt als Materialwulst an der vorbeschriebenen Position wie ein Dichtring und verhindert Mediumsaustritt an der Schnittstelle zwischen Messrohr 51 und Prozessanschluss.

Die Stützbuchse 59 aus Sintermaterial verleiht der Dichtleiste wesentlich mehr mechanische Stabilität als eine einfache Materialwulst, wie z.B. die Materialwulst 24 in Fig. 3, aus Linermaterial ohne entsprechende Stützung.

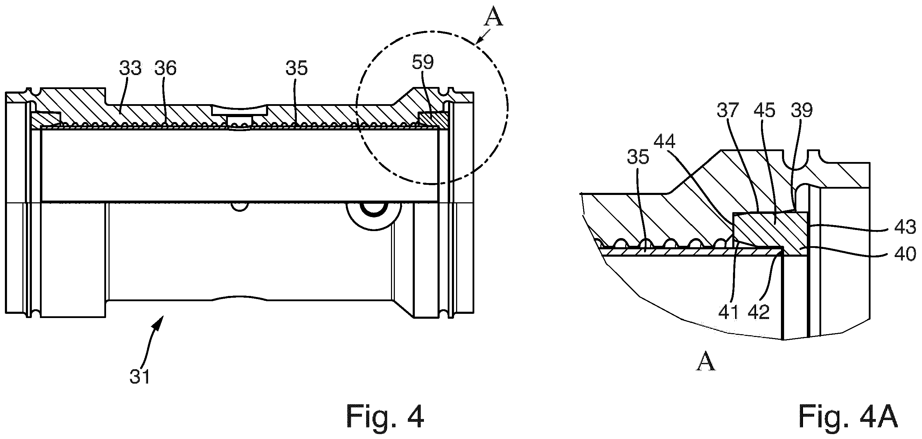

Fig. 4 zeigt ein Zwischenprodukt 31 bei der Herstellung des Messrohres der Fig. 5. Man erkennt den Aufbau aus Trägerrohr 33, einem Stützkörper 35 und einer dazwischenbefindlichen spiralförmigen Kontur 36. Die Stützbuchse aus Sintermaterial ist ebenfalls in Fig. 4 sichtbar. Ein entsprechender Liner ist in dem Zwischenprodukt noch nicht eingezogen. Anhand von Fig. 4 und Fig. 4a soll näher auf die bevorzugte Ausgestaltung der Stützbuchse aus porösem Material eingegangen werden.

Das poröse Material kann grundsätzlich Kunststoff, beispielsweise ein offenzelliger Kunststoffschaum, oder eine Keramik, beispielsweise eine Schaumkeramik, oder ein Sintermetall, mit Poren, sein.

Anders als in Lehre der EP 1 039 269 A1 nach welcher das Trägerrohr eine Auskleidung komplett mit Sintermaterial aufweist, handelt es sich bei der Variante der vorliegenden Erfindung lediglich um eine Stützbuchse, also ein aufgestecktes Bauteil und keine In-situ über die ganze Messrohrlänge eingebrachte Sinterschicht.

Es hat sich überraschend gezeigt, dass eine solche endseitige Stützbuchse hinlänglich zur Anbindung des Liners an ein Messrohr ausreicht. Zugleich bietet die Verwendung einer Stützbuchse erheblich geringeren Aufwand bei der Herstellung, wodurch sich sowohl ein Zeit- als auch ein Kostenersparnis bezüglich des verwendeten Materials ergeben. Die Stützbuchse kann dabei insbesondere schon als gesondertes Fertigteil genutzt werden und muss nicht erst im Trägerrohr ausgeformt werden.

Wie in Fig. 4 und 5 erkennbar ist die Sinterbuchse in die Ausnehmung 37 in dem Endbereich des Trägerrohres eingesteckt ist. Dies ermöglicht vorteilhaft u.a. eine kompakte Ausführung der Gesamtkonstruktion.

Das Material der Stützbuchse ist vorteilhafterweise ein sinterfähiges Metall, insbesondere Sinterbronze. Dieses Material verschmilzt nicht im Sintervorgang zu einem kompakten Material, sondern weist noch eine hinreichende Porosität auf. Zugleich ist Metall gegenüber Kunststoff zumeist mechanisch widerstandsfähiger und auch thermisch belastbarer. Schaumkeramiken sind oftmals hart und widerstandfähig, tendieren aber bei Erschütterungen und thermischen Ausdehnungen zum Zerbrechen. Daher wäre eine Anwendung solcher Messrohre begrenzt. Demgegenüber ist insbesondere Sinterbronze sehr gut bearbeitbar. Aufgrund der metallischen Duktilität kommt es zudem nicht zum Materialbruch bei Erschütterungen. Es ist insbesondere von Vorteil, wenn das Material der Stützbuchse Sinterkügelchen sind, welche durch einen Sintervorgang miteinander verbunden sind, und welche in den Kugelzwischenräumen Poren aufweisen. Dadurch kann eine weiter-verbesserte Widerstandsfähigkeit gegenüber Druckbelastungen erreicht werden. Genau diese Funktionalität ist sehr wichtig bei der Ausgestaltung einer Dichtleiste eines Messrohres. Besonders bevorzugt bestehen die Sinterkügelchen dabei aus Bronze. Für eine optimale Porengröße zur Anbindung des Liners sollten die Sinterkügelchen einen Durchmesser von mehr als 0,1 mm aufweisen.

Das Trägerrohr ist vorteilhaft jeweils endseitig mit einer Materialwulst aus Linermaterial bedeckt, welche einen Anschlag für einen Prozessanschluss bildet. Die elastische Verformbarkeit des Liners bewirkt eine besonders hohe Dichtigkeit. Daher kann der Liner direkt als Anschlagsfläche dienen und sich unter dem mechanischen Druck beim Anschluss des Prozessrohres ähnlich einer Dichtung verformen. Die Anschlussfläche je einer endständige Stützbuchse, mit welcher das Messrohr an einen Prozessanschluss anschließbar ist, sollte vorteilhafterweise teilweise oder vollständig mit der Materialwulst aus Linermaterial bedeckt sein, um so eine breite Dichtfläche zu schaffen.

Die Stützbuche weist eine ringförmige Gestalt auf, mit einer oberen und einer unteren Kreisringfläche 43, 44. Die untere Kreisringfläche 44 ist innerhalb einer ringförmigen Ausnehmung 37 angeordnet und schlägt gegen die Wandung des Trägerrohres an. Die obere Kreisfläche zeigt in Richtung eines anzuschließenden Prozessrohres. Auf dieser oberen Kreisfläche ist später die Materialwulst des Liners angeordnet. Die Stützbuchse 59 verjüngt sich in Richtung der unteren Kreisfläche 44. Die Verjüngung 41 bewirkt, dass die untere Kreisfläche 44 kleiner ist als die obere Kreisfläche 43. Dies ermöglicht ein besseres Einführen der Stützbuchse 59 in die ringförmige Ausnehmung 37. Anders als bei herkömmlichen massiven Metallbuchsen, kann poröses Material allerdings leicht splittern, brechen oder sich verformen. Daher ist es nicht trivial eine solche Verjüngung oder ähnliche Materialausformungen auch bei Stützbuchsen aus porösen Materialien vorzusehen. Bei Sintermetallen kann dies dadurch gelöst werden, dass die Sinterkügelchen in eine Form gegeben werden und anschließend miteinander im Sinterprozess durch thermische Behandlung verbunden werden.

Die Stützhülse 59 weist zudem einen umlaufenden Schenkel 40 auf, welcher aus dem Grundkorpus 45 in Richtung der Messrohrachse M radial hervorsteht. Dieser Schenkel weist eine Anschlagsfläche 42 für den Anschlag des Stützkörpers 35 auf. Der Schenkel 40 steht dabei in dem Ausmaß aus dem Grundkorpus 45 hervor, wie die Stärke des Stützkörpers - insbesondere wie die Blechstärke des Lochblechs. Dadurch wird eine einheitliche Fläche erreicht.

Die Ausnehmung 37 des Trägerrohres 33 weist zudem eine Anschrägung 39 auf, welche ein besseres Einführen der Stützhülse 59 in die Ausnehmung 37 ermöglicht.

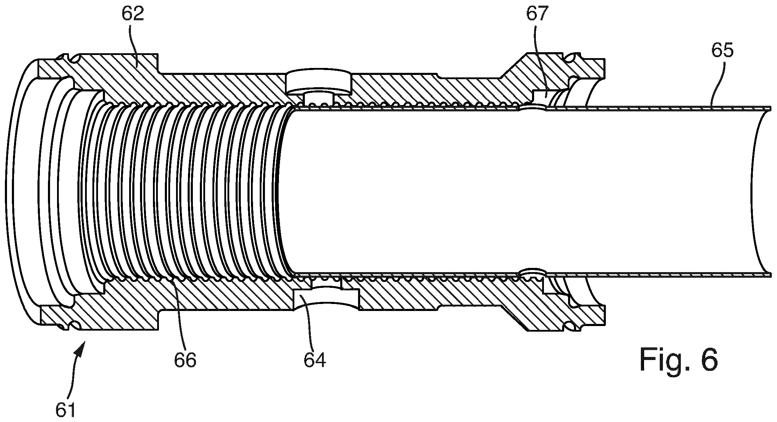

Fig. 6 zeigt nochmals ein Zwischenprodukt 61 bei der Herstellung eines Messrohres gemäß Fig. 5. Es zeigt ein Trägerrohr 52, einen Stützkörper 65, welcher axial in das Trägerrohr 62 einführbar ist. Man erkennt die spiralförmige Kontur, welche in diesem Fall in das Trägerrohr 62 eingebracht ist. Der Stützkörper 65 ist hier nur schematisch gezeigt. Es handelt sich eigentlich um ein Lochblech mit einer Mehrzahl von Löchern. Durch die Einspritzbuchse 64 kann anschließend der Liner von beiden Seiten des Stützkörpers 65, also sowohl zwischen Trägerrohr 62 und Stützkörper 65, als auch in den Innenbereich des Messrohres auf den Stützkörper 65, eingebracht werden. Das Linermaterial dringt dabei in die Ausnehmungen der Kontur des Trägerrohres 62 ein. Dadurch ergibt sich eine Verdrehsicherung, bei gleichzeitiger axialer Arretierung des Liners durch die Stützbuchsen 59. Dabei wird der Stützkörper 65 in das Linermaterial eingebunden.

Fig. 7 zeigt eine weitere Ausführungsvariante eines Messrohres 71. Dabei handelt es sich um ein Messrohr mit reduziertem Messrohrquerschnitt. Das Trägerrohr 73 weist einen einheitlichen Innendurchmesser mit einer spiralförmigen Kontur 76 auf. Innerhalb des Trägerrohres 73 ist ein Stützkörper 75 angeordnet. Dieser Stützkörper weist eine zylindrische Grundform 75 auf. Abweichend zur Zylinderform verringert sich der Innendurchmesser des Stützkörpers 75 jedoch zur Mitte hin. Daraus ergibt sich ein Zwischenraum 80 zwischen dem Trägerrohr 73 und dem Stützkörper 75, welcher mit Linermaterial ausgefüllt wird. Dieser Zwischenraum 80 wurde in Fig. 7 zur besseren Darstellung der spiralförmigen Kontur 76 nicht als ausgefüllt dargestellt. Der Stützkörper der Fig. 7 weist ebenfalls Materialunterbrechungen, z.B. Löcher auf und daher mit Linermaterial umgeben. Die innerste Schicht 72 ist ebenfalls Linermaterial. Analog zu Fig. 5 weist auch das Messrohr 71 der Fig. 7 endständige Stützbuchsen 79 auf. Diese sind mit einer Materialwulst 74 in Richtung des Prozessanschlusses bedeckt und bildet gemeinsam mit dieser eine form- und druckstabile Dichtleiste aus. Das in Fig. 7 dargestellte Messrohr kann insbesondere für magnetisch-induktive Durchflussmessgeräte mit kurzen Einlaufstrecken genutzt werden. Eine Verdrehsicherung des Liners durch die spiralförmige Kontur wird dabei sowohl in den Endbereichen des Stützkörpers erreicht als auch im Mittelbereich.

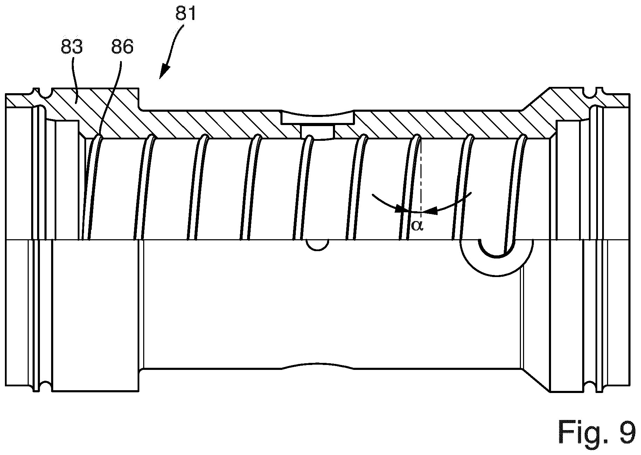

Fig. 9 zeigt ein weiteres Ausführungsbeispiel eines Zwischenproduktes 81 bei der Herstellung eines Messrohres. Hierbei weist die spiralförmige Kontur 86 weniger Vertiefungsbereiche gegenüber den vorangegangenen Ausführungsbeispielen auf. Dies liegt u.a. daran, dass bei diesem Ausführungsbeispiel der Anstieg α der spiralförmigen Kontur steiler gewählt wurde. Dadurch stehen dem Linermaterial weniger Vertiefungsbereiche zur Verfügung, in welchen er sich einlagern kann. Andererseits verhindert die Steilheit des Anstiegs einen zu großen Toleranzbereich bei Rotationseinwirkung. Als bevorzugter Kompromiss hat sich eine Steigung zwischen 0,25% und 7% erwiesen.

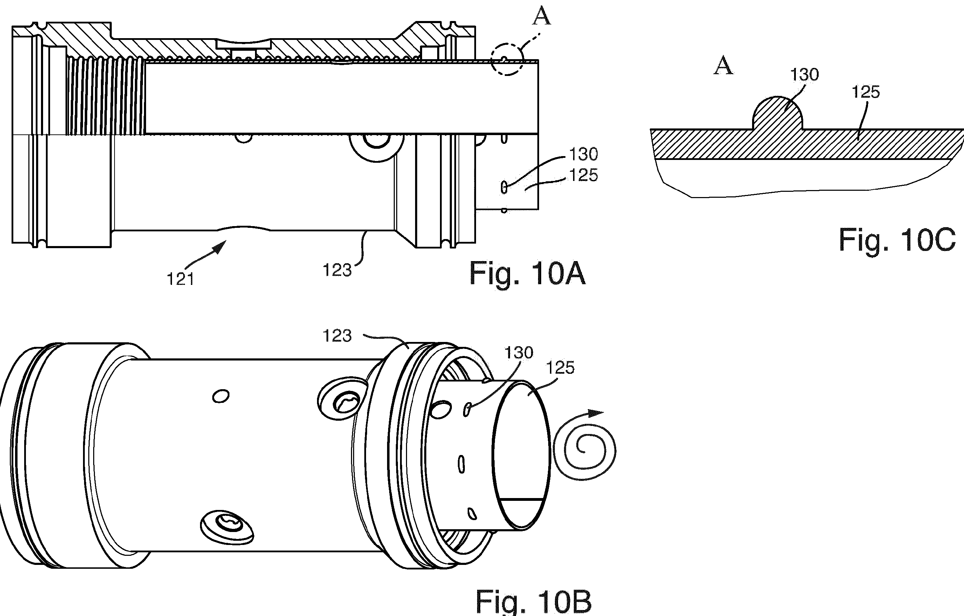

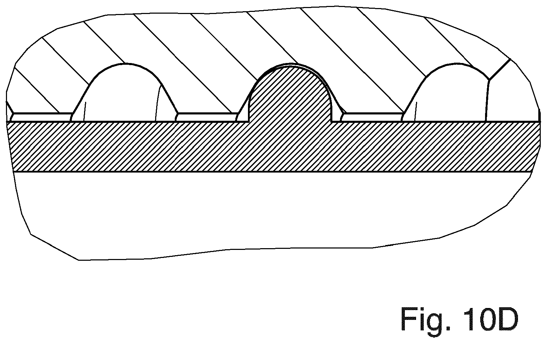

Fig. 10 A-D zeigt eine weitere Ausführungsvariante eines Zwischenproduktes 121 bei der Herstellung eines Messrohres. Dieses weist einen Grundaufbau analog zu Fig. 4 auf. Es weist ein Trägerrohr 123 mit einer spiralförmigen Kontur 126 an der Innenwandung und einen darin einschiebbaren Stützkörper 125 auf. Der Stützkörper 125 weist im Unterschied zu den vorhergehenden Ausführungsbeispielen randseitig Vorsprünge 130 auf, die radial von der Messrohrachse wegführen und zur Verankerung in der spiralförmigen Kontur vorgesehen sind. Diese können insbesondere im hinteren Viertel des Stützkörpers 125 angeordnet sein. Bei der Herstellung wird der Stützkörper zunächst bis zu den Vorsprüngen 130 eingeschoben und anschließend durch eine Rotationsbewegung befestigt. Dabei greifen die Vorsprünge 130 in die spiralförmige Kontur 126. Dadurch findet eine zusätzliche axiale mechanische Verankerung statt, was Vorteile für die Positionierung des Stützrohres vor dem Einbringen des Liners hat.

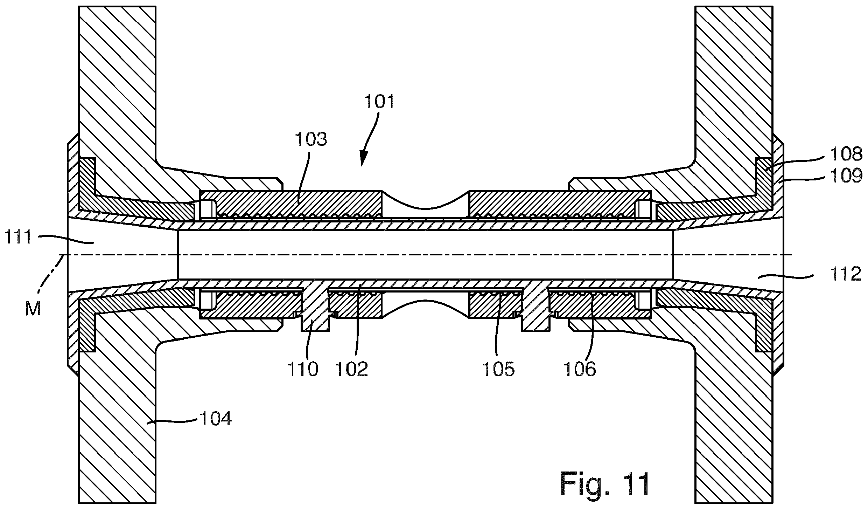

Fig. 11 zeigt eine weitere Ausführungsvariante eines Messrohres 101 für ein magnetisch-induktives Durchflussmessgerät, in diesem Fall mit einer asymmetrischen Anordnung von Bezugselektroden 110. Das Messrohr weist einen Einlauf- und Auslaufbereich 111 und 112 mit größeren Ein- und Auslaufinnendurchmessern auf als im Mittelbereich des Messrohres. Das Messrohr 101 umfasst ein mittleres Trägerrohr 103 mit einer Innenwandung mit spiralförmiger Kontur 106 und einem darin angeordneten Stützkörper 105. Dieser weist Materialausnehmungen auf. Der Liner 102 bindet den Stützkörper an die Innenwandung des Trägerrohres 103. Das mittlere Trägerrohr 103 geht in vorderen und hinteren Bereich in zwei angeschweißte Flanschsegmente 102 über. Auf deren prozessanschlussseitigen Flächen befindet sich jeweils ein Linermaterial 109. Dieses kann z.B. durch Bördelung um 90° zur Messrohrachse M herumgebogen sein. Die Dichtleiste in Fig. 11 wird durch jeweils eine Stützbuchse aus komprimiertem Sintermaterial 108 begrenzt.

In den vorhergehenden Beispielen war stets der Liner zwischen der spiralförmigen Kontur und dem Stützkörper angeordnet. Es ist jedoch im Rahmen der vorliegenden Erfindung auch möglich den Stützkörper mit einem Außengewinde zu versehen und diesen in die spiralförmige Kontur einzudrehen. Dabei liegt der Stützkörper direkt an der spiralförmigen Kontur auf. Der Liner kann dabei während oder nach dem Einbringen, hier Einschrauben, des Stützkörpers innenseitig auf den Stützkörper gebracht werden.

### Bezugszeichenliste

- 1, 11, 31, 61, 81, 121: Zwischenprodukt
- 2, 12: Ausformung für Prozessanschluss
- 3, 13, 23, 33, 53, 62, 73, 103: Trägerrohr
- 4: Konturansatz
- 5: Verankerungsposition
- 6, 16, 26, 36, 56, 76, 86, 106, 126: spiralförmige Kontur
- 7: Aufweitung
- 8: Vertiefung
- 9: Anschluss
- 10: Verankerungsposition
- 15, 25, 35, 55, 65, 125: Stützkörper
- 17,37: Ausnehmung
- 18: Materialunterbrechungen
- 21, 51, 71, 101: Messrohr
- 22, 52, 72, 102: Liner/Linerschicht
- 24, 74: Materialverdickung/Materialwulst
- 27: Materialausnehmung
- 39: Anschrägung
- 40: umlaufender Schenkel
- 41: Verjüngung
- 42: Anschlagsfläche
- 43: obere Kreisringfläche
- 44: untere Kreisringfläche
- 45: Grundkorpus
- 54, 109: Liner
- 59, 79, 108: Stützbuchse
- 64: Einspritzbuchse
- 80: Zwischenraum
- 91: magnetisch-induktives Durchflussmessgerät
- 92: Feldspulen
- 93: Messelektroden
- 94: Messrohr
- 111: Einlaufbereich
- 112: Auslaufbereich
- 130: Vorsprünge

- A: Endsegment des Trägerrohres
- B: Mittelsegment des Trägerrohres
- C: Endsegment des Trägerrohres
- M: Messrohrachse
- α: Anstieg

## Patentansprüche

1. Messrohr ausgeführt zum Einsatz in einem magnetisch-induktiven Durchflussmessgerät, umfassend:
- ein Trägerrohr (33, 53, 62, 73, 103),
- einen im Trägerrohr (33, 53, 62, 73, 103) angeordneten Liner (52, 72, 102),
- einen Stützkörper (15, 25, 35, 55, 65, 125),
- zwei endständige Stützbuchsen (59, 79, 108) zur Verankerung des Liners (52, 72, 102) am Trägerrohr (33, 53, 62, 73, 103),
wobei die Stützbüchsen (59, 79, 108) jeweils axial innenseitig eine Anschlagsfläche (42) für den Anschlag des Stützkörpers (35, 55, 65, 125) aufweisen,
wobei die Stützbuchsen (59, 79, 108) aus porösem Material bestehen,
wobei der Stützkörper (15, 25, 35, 55, 65, 125) im Liner (52, 72, 102) eingebettet ist,
**dadurch gekennzeichnet, dass** die Stützbuchsen (59, 79, 108) jeweils in eine Ausnehmung (37) in einem Endbereich (A, C) des Trägerrohres eingesteckt sind,
wobei das Material der Stützbuchsen (59, 79, 108) ein sinterfähiges Metall ist,
wobei das Material der Stützbuchsen (59, 79, 108) aus durch einen Sintervorgang miteinander verbundenen Sinterkügelchen besteht und in den Kugelzwischenräumen Poren aufweist,
wobei die Sinterkügelchen einen Durchmesser von mehr als 0,1 mm aufweisen,
wobei eine Anbindung zwischen Liner (52, 72, 102) und Stützbuchsen (59, 79, 108) vorliegt.

2. Messrohr nach Anspruch 1, **dadurch gekennzeichnet, dass** die Sinterkügelchen aus Bronze bestehen.

3. Messrohr nach einem der vorhergehenden Ansprüche, **dadurch gekennzeichnet, dass** das Trägerrohr jeweils endseitig mit einem Materialwulst (24, 74) aus Linermaterial bedeckt ist, welches einen Anschlag für einen Prozessanschluss bildet.

4. Messrohr nach einem der vorhergehenden Ansprüche, **dadurch gekennzeichnet, dass** die Anschlussfläche je einer endständigen Stützbuchse (59, 79, 108), mit welcher das Messrohr (51, 71, 101) an einen Prozessanschluss anschließbar ist, teilweise oder vollständig mit dem Materialwulst (24, 74) aus Linermaterial bedeckt ist.

5. Messrohr nach einem der vorhergehenden Ansprüche, **dadurch gekennzeichnet, dass** zwischen dem Trägerrohr (33, 53, 62, 73, 103) und dem Stützkörper (35, 55, 65, 125) eine spiralförmige Kontur (36, 56, 76, 86, 106, 126) angeordnet ist.

6. Messrohr nach einem der vorhergehenden Ansprüche, **dadurch gekennzeichnet, dass** die Stützbuchsen jeweils eine ringförmige Gestalt aufweisen, mit einer oberen und einer unteren Kreisringfläche (43, 44), wobei die obere Kreisfläche (44) in Richtung eines anzuschließenden Prozessrohres gerichtet ist und wobei sich die Stützbuchsen (59, 79, 108) jeweils in Richtung der unteren Kreisfläche (44) verjüngen.

7. Messrohr nach Anspruch 1, **dadurch gekennzeichnet, dass** das Material der Stützbuchsen Sinterbronze ist.

8. Messrohr nach Anspruch 1, **dadurch gekennzeichnet, dass** der Stützkörper ein Lochblech umfasst.

9. Magnetisch-induktives Durchflussmessgerät mit einem Messrohr nach einem der vorhergehenden Ansprüche.

## Claims

1. Measuring tube designed for use in an electromagnetic flowmeter, said measuring tube comprising:
- a carrier tube (33, 53, 62, 73, 103),
- a liner (52, 72, 102) arranged in the carrier tube (33, 53, 62, 73, 103)
- a support body (15, 25, 35, 55, 65, 125),
- two terminal support bushings (59, 79, 108) design to anchor the liner (52, 72, 102) on the carrier tube (33, 53, 62, 73, 103),
wherein the support bushings (59, 79, 108) each have a contact surface (42), on the inside and in an axial direction, said contact surface (42) serving as a stop for the support body (35, 55, 65, 125),
wherein the support bushings (59, 79, 108) are made from a porous material,
wherein the support body (15, 25, 35, 55, 65, 125) is embedded in the liner (52, 72, 102), **characterized in that** the support bushings (59, 79, 108) are each inserted in a recess (37) in an end section (A, C) of the carrier tube,
wherein the material of the support bushings (59, 79, 108) is a metal which can be sintered,
wherein the material of the support bushings (59, 79, 108) is made from sintering beads joined together in a sintering process and has pores between the beads,
wherein the sintering beads have a diameter greater than 0.1 mm,
wherein there is a connection between the liner (52, 72, 102) and the support bushings (59, 79, 108).

2. Measuring tube as claimed in Claim 1, **characterized in that** the sintering beads are made from bronze.

3. Measuring tube as claimed in one of the previous claims, **characterized in that** the carrier tube is covered at each end by an overlap of material (24, 74) made from liner material, said overlap forming a stop for a process connection.

4. Measuring tube as claimed in one of the previous claims, **characterized in that** the connecting surface of each end bushing (59, 79, 108) - by means of which the measuring tube (51, 71, 101) can be connected to a process connection - is partly or fully covered by the material overlap (24, 74) made from the liner material.

5. Measuring tube as claimed in one of the previous claims, **characterized in that** a spiral contour (36, 56, 76, 86, 106, 126) is arranged between the carrier tube (33, 53, 62, 73, 103) and the support body (35, 55, 65, 125).

6. Measuring tube as claimed in one of the previous claims, **characterized in that** the support bushings each have an annular shape, with an upper and a lower annular surface (43, 44), wherein the upper annular surface (44) points in the direction of a process tube to be connected, and wherein the support bushings (59, 79, 108) each taper in the direction of the lower annular surface (44).

7. Measuring tube as claimed in Claim 1, **characterized in that** the material of the support bushings is sintered bronze.

8. Measuring tube as claimed in Claim 1, **characterized in that** the support body comprises a perforated plate.

9. Electromagnetic flowmeter with a measuring tube as claimed in one of the previous claims.

## Revendications

1. Tube de mesure conçu pour être utilisé dans un débitmètre électromagnétique, lequel tube de mesure comprend :
- un tube porteur (33, 53, 62, 73, 103),
- un revêtement (52, 72, 102) disposé dans le tube porteur (33, 53, 62, 73, 103)
- un corps de support (15, 25, 35, 55, 65, 125),
- deux douilles de support d'extrémité (59, 79, 108) destinées à l'ancrage du revêtement (52, 72, 102) au tube porteur (33, 53, 62, 73, 103),
les douilles de support (59, 79, 108) présentant chacune, dans le sens axial et à l'intérieur, une surface de butée (42) servant de butée au corps de support (35, 55, 65, 125),
les douilles de support (59, 79, 108) étant constituées d'un matériau poreux,
le corps de support (15, 25, 35, 55, 65, 125) étant encastré dans le revêtement (52, 72, 102),
**caractérisé en ce que** les douilles de support (59, 79, 108) sont chacune insérées dans un évidement (37) dans une zone d'extrémité (A, C) du tube porteur,
le matériau des douilles de support (59, 79, 108) étant un métal frittable,
le matériau des douilles de support (59, 79, 108) étant constitué de billes frittées liées entre elles par un procédé de frittage et présentant des pores dans les interstices entre les billes,
les billes frittées présentant un diamètre supérieur à 0,1 mm,
le revêtement (52, 72, 102) et les douilles de support (59, 79, 108) étant reliés entre eux.

2. Tube de mesure selon la revendication 1, **caractérisé en ce que** les billes frittées sont constituées de bronze.

3. Tube de mesure selon l'une des revendications précédentes, **caractérisé en ce que** le tube porteur est recouvert à chaque extrémité d'un bourrelet (24, 74) constitué du matériau de revêtement, lequel bourrelet forme une butée pour un raccord process.

4. Tube de mesure selon l'une des revendications précédentes, **caractérisé en ce que** la surface de raccordement de chaque douille de support d'extrémité (59, 79, 108), au moyen de laquelle le tube de mesure (51, 71, 101) peut être raccordé à un raccord process, est partiellement ou complètement recouverte du bourrelet (24, 74) constitué du matériau de revêtement.

5. Tube de mesure selon l'une des revendications précédentes, **caractérisé en ce qu'**un contour en forme de spirale (36, 56, 76, 86, 106, 126) est disposé entre le tube porteur (33, 53, 62, 73, 103) et le corps de support (35, 55, 65, 125).

6. Tube de mesure selon l'une des revendications précédentes, **caractérisé en ce que** les douilles de support présentent chacune une forme annulaire, avec une surface annulaire supérieure et une surface annulaire inférieure (43, 44), la surface annulaire supérieure (44) étant dirigée en direction d'un tube de process à raccorder, et les douilles de support (59, 79, 108) se rétrécissant chacune en direction de la surface annulaire inférieure (44).

7. Tube de mesure selon la revendication 1, **caractérisé en ce que** le matériau des douilles de support est du bronze fritté.

8. Tube de mesure selon la revendication 1, **caractérisé en ce que** le corps de support comprend un tôle perforée.

9. Débitmètre électromagnétique avec un tube de mesure selon l'une des revendications précédentes.
